# EUROPEAN PATENT SPECIFICATION

(11) **EP 0 766 949 B1**
(45) Date of publication and mention of the grant of the patent: **15.01.2003**
(21) Application number: 96830481.6
(22) Date of filing: 25.09.1996
(51) Int. Cl.: A61C 1/00, A61C 19/00

(54) **A dental unit control and service system**
Steuer- und Wartungssystem für Dentaleinheit
Système de commande et de service pour unité dentaire

(30) Priority: 28.09.1995 IT BO950455
(43) Date of publication of application: 09.04.1997
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- WO-A-89/05613
- DE-A- 2 524 056
- DE-A- 4 409 862
- DE-B- 2 844 348

## Description

The present invention relates to a system for controlling and servicing a dental unit.

The production of dental units at the present time is strongly influenced by the rapid advances made in the design of special electronic and computer systems capable of activating and monitoring the functions of dental units in real time, during treatment sessions.

These functions, in the form of specific data for each type of handpiece or accessory instrument, are memorized and processed by systems that use microprocessors connected to peripheral units consisting of viewers allowing the functions to be read out and sensor units which allow the parts at work to be distinguished from those at rest: such a system thus combines one or more microprocessors to form the "heart" that allows a dental unit to function.

The document DE 28 44 348B discloses a dental unit control system according to the preamble of claim 1.

The Applicant, by exploiting the enormous and well-known potentialities offered by the use of microprocessors and by the possibility of interfacing them with modern data transmission systems, has produced a dental unit control and service system capable of quickly and surely checking the working conditions of the various parts of a dental unit and of activating an on-line service unit when a fault is diagnosed.

The characteristics of the invention are laid out in the claims below and the advantages of the disclosure are apparent from the detailed description which follows, with reference to the accompanying drawings, which illustrate a preferred embodiment of the invention and in which:
- Figure 1 is a block diagram of the dental unit control and service system disclosed by the present invention;
- Figure 2 is a flow diagram showing the operation of the system illustrated in Fig. 1;
- Figures 3 and 4 are detail views of parts of the system illustrated in Fig. 1, namely, a pair of call on and off buttons and a modem call display page showing a different embodiment of the call button.

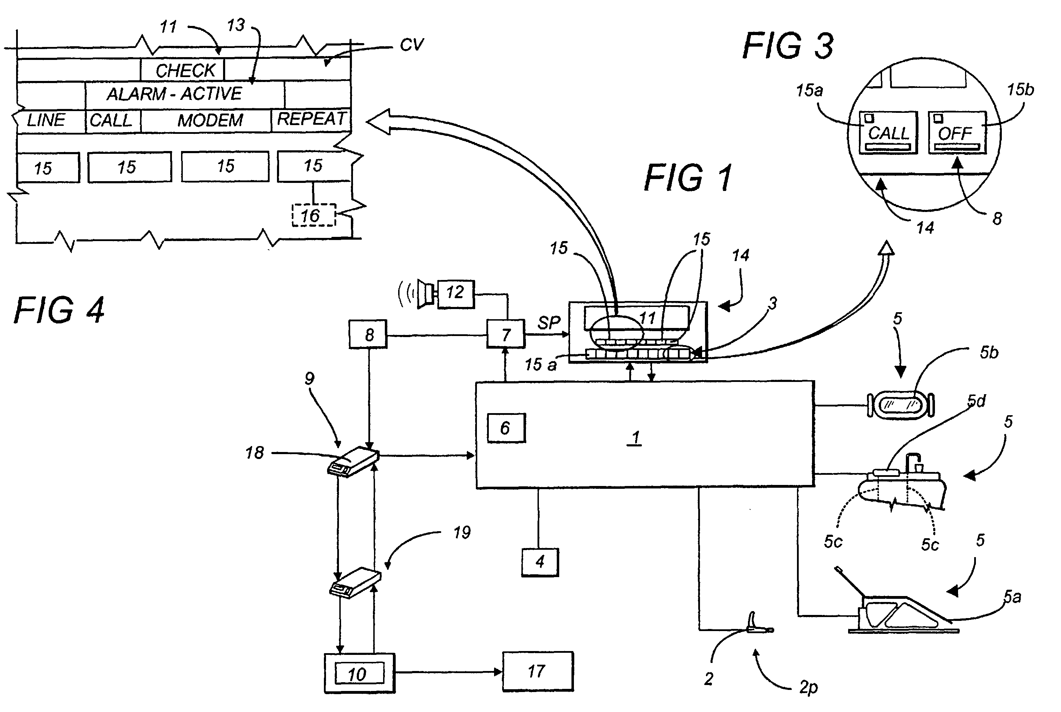

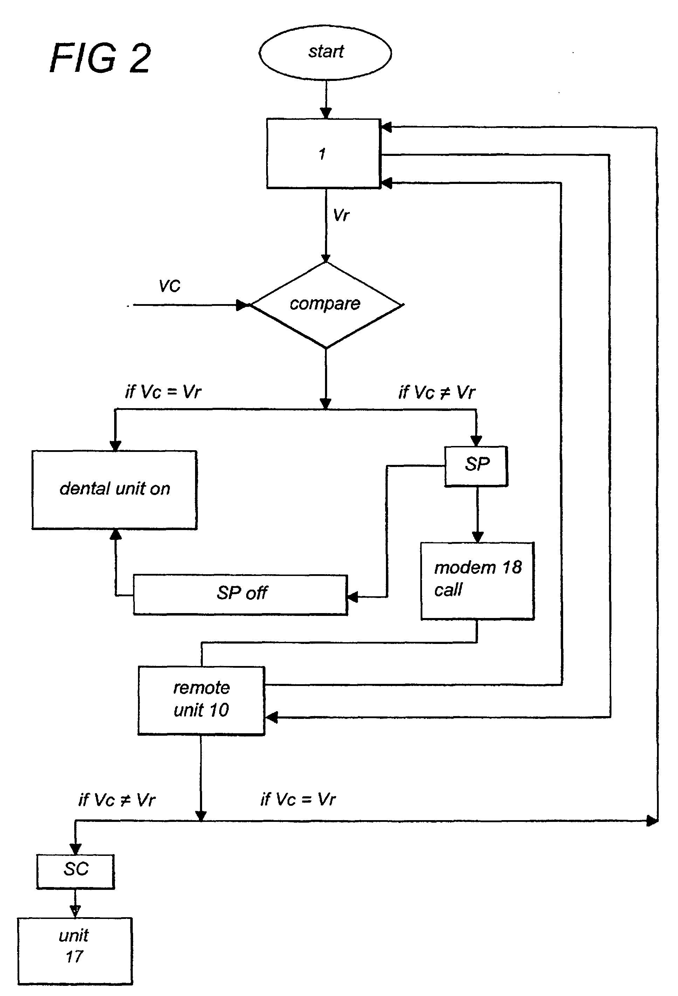

In accordance with the drawings listed above, and in particular Fig.1, the system disclosed is capable of controlling and servicing a dental unit. The dental unit includes a microprocessor unit 1 which monitors it, the said unit 1 being connected to first and second means 2 and 3 (such as a pedal unit 2p and buttons described in more detail below) for activating and controlling main items of equipment 4 (for example, handpieces, illustrated schematically as a block since they do not form part of the invention) and secondary items of equipment 5 of the dental unit (such as a dental chair 5a, a lamp 5b, water and compressed air pipes 5c, a cuspidor bowl, etc.).

The unit 1 may also process and vary working function data and accessory data of selected items of equipment, the said data being displayed on a console 14, also controlled by the unit 1, forming part of the dental unit and consisting of a viewer 11, divided into several display fields CV (shown in Fig. 4) correlated with the aforementioned buttons 15 (preferably NO TOUCH buttons) designed to activate and adjust some of the said items of equipment 4 and 5 and located below the viewer 11. The system is completed by a unit 6 for the "self-diagnosis" of the dental unit, that is to say, for checking the values, labelled Vr in Fig. 2, correlated with the said main and secondary pieces of equipment 4 and 5 and comparing the said values with preset, default reference values (for example, voltage, water pressure, presence or absence of handpieces on their holders, etc.).

The checking unit 6 may be activated automatically every time the dental unit is switched on or at regular preset intervals defined by entering an appropriate time interval in the microprocessor unit 1.

The unit 6 is connected to an alarm device 7 which issues a positive output signal SP if one or more differences are found between the values checked Vr and the reference values Vc; the alarm device 7 is also capable of displaying the different item or items of data detected by the checking unit and correlated with the piece or pieces of equipment 4 and 5. The alarm device 7 is composed of a sound unit 12 and a display field 13 (preferably the starting display page) on the viewer 11, in which the different item or items of data detected are displayed: when the signal SP is activated, the initialization of the dental unit by the microprocessor unit 1 is interrupted.

The numeral 8 indicates a device for activating a remote call unit 9 designed to establish an on-line link with a remote service unit 10 which is capable of directly interacting with the microprocessor unit 1.

As shown in Fig.1, the device 8 for activating the remote call unit 9 may consist of a first button 15a, which may be operated manually by the dental surgeon or his/her assistant and which opens a display page on viewer 11 containing functions correlated with other buttons 15 below. The latter make it possible to activate the call unit 9 through a standard procedure. A second button 15b, located next to the button 15a, is envisaged to cancel the call and, hence, also to by-pass the aforesaid positive signal SP displayed by the alarm device 7.

In another embodiment of the invention, illustrated in the detail view, Fig. 3, the device 8 for activating the call unit 9 consists of two buttons 15a and 15b: the first button 15a instantly activates the call unit 9, whilst the second 15b cancels the aforesaid positive alarm signal SP.

In yet another embodiment of the invention, illustrated in Fig. 4, the device 8 for activating the call unit 9 consists of a single button 15c which can be used to cancel the positive alarm signal SP and of a timer 16 connected to the button 15c: if the button 15c is not operated within a preset delay time after the alarm signal SP is activated, the timer 16 automatically activates the call unit 9. The preset delay time of the timer 16 can be changed.

The aforesaid call unit 9 (see Fig. 3) consists of a first modem 18 for transmitting data by cable, connected to the microprocessor unit 1 and designed to transmit and receive data to and from a second remote modem 19 connected to the said remote unit 10.

As mentioned earlier on in the text, the remote unit 10, consists of a second microprocessor unit capable of dialoguing and interacting with the unit 1 in order to change or reset the incorrect values Vr or to redefine the setup of the reference values Vc. If the changes transmitted to the unit 1 have no effect, the central unit 10 automatically issues a call signal SC to a mobile service centre 17 requesting on-the-spot intervention on the dental unit.

The system described above can perform the following procedures, starting from a condition in which the dental unit is switched off.

The dental surgeon or his/her assistant switches on the dental unit. The microprocessor unit 1 and, in particular, the checking unit 6, runs a "self-diagnosis" procedure on all the parts of the dental unit it controls. If no differences are found between the values Vr checked by the unit 6 and the default reference values Vc of the unit 6, the microprocessor unit 1 continues the procedure to initialize the dental unit.

If a fault is detected, that is to say, if the values Vr differ from the corresponding values Vc, the alarm device 7 issues a positive signal SP which activates the sound unit 12 and calls up the display page 13 on viewer 11 on which the anomalous data item or items concerned are shown.

At this point, the dental surgeon or his/her assistant may cancel the signal SP with the appropriate button 15b or 15c (depending on the embodiment of the invention) if the anomalous item can be rectified by the user (for example, a blown lamp). Otherwise, the button 15a is activated to call up to the viewer the display page from which the first modem 18 can be activated in order to call the remote unit 10. In the third embodiment of the invention described above, all the user needs to do is wait for the preset delay time to elapse, without pressing the button 15c, so as to allow the timer 16 to establish the modem connection.

Once the connection has been established, the remote unit 10 tries to reset the dental unit to correct operating conditions, where possible, by modifying the checked data Vr, or even the reference values Vc. If the correct operating conditions cannot be reset, the remote unit 10 issues a signal SC to call a mobile service centre and requesting on-the-spot intervention on the dental unit.

This system guarantees safe operation of the dental unit at all times not only by rapidly detecting faults in individual pieces of equipment forming part of the dental unit itself but also by permitting an effective on-line service by the manufacturer, thus considerably reducing down time and avoiding the consequent inconvenience for the dental surgeon and, even more so, for the waiting patient.

The invention described can be subject to modifications and variations without thereby departing from the scope of the inventive concept.

Moreover, all the details of the invention may be substituted by technically equivalent elements.

## Claims

1. A dental unit control and service system comprising at least one unit (1) for monitoring the dental unit; the said unit (1) being connected to first and second means (2) and (3) designed to activate and control main (4) and secondary (5) items of equipment of the dental unit and to process and vary working function data and accessory data of selected items of the said equipment, and comprising:
- a unit (6) for checking values (Vr) correlated with main (4) and secondary (5) pieces of equipment, the said values (Vr) being compared with preset reference values (Vc);
- an alarm device (7) connected to the checking unit (6) and designed to issue a positive output signal (SP) when a difference between the values checked (Vr) and the reference values (Vc) is found, the signal also indicating the different item or items of data correlated with the piece or pieces of equipment (4, 5);
the said system being **characterized in that** it further comprises
- a device (8) for activating a remote call unit (9) which establishes an on-line link with a remote service unit (10) capable of interacting directly with the microprocessor unit (1) that monitors the dental unit.

2. The system according to claim 1, **characterized in that** the said unit (6) is activated automatically every time the dental unit is switched on.

3. The system according to claim 1, **characterized in that** the said unit (6) is activated at regular preset intervals defined by entering an appropriate time interval in the microprocessor unit (1).

4. The system according to claim 1, where the said dental unit has a viewer (11) for displaying the working function data and accessory data of the said equipment **characterized in that** the alarm device (7) is composed of a sound unit (12) and a display field (13) on the viewer (11), in which the said different item or items of data detected are displayed.

5. The system according to claim 1, wherein the said dental unit has a console (14) equipped with a viewer (11) divided into several display fields (CV) correlated with the aforementioned buttons (15) designed to activate and adjust some of the said items of equipment (4, 5) and located below the viewer (11), **characterized in that** the said device (8) for activating the remote call unit (9) consists of a first button (15a), which may be operated manually and which opens a display page on viewer (11) containing functions correlated with other buttons (15) below, the latter making it possible to activate the call unit (9), and a second button (15b) designed to cancel the call and to by-pass the aforesaid positive signal (SP) issued by the alarm device (7).

6. The system according to claim 1 **characterized in that** the said device (8) for activating the remote call unit (9) consists of two buttons (15a and 15b), the first (15a) being designed to instantly activate the said call unit (9) and the second (15b) to cancel the positive signal (SP) issued by the alarm device (7).

7. The system according to claim 1 **characterized in that** the said device (8) for activating the remote call unit (9) consists of a button (15c) for cancelling the positive signal (SP) issued by the alarm device (7) and of a timer (16) connected to the said button (15c) and designed to activate the said call unit (9) if the positive signal (SP) remains active for longer than a preset length of time entered in the said timer (16).

8. The system according to claim 1 **characterized in that** the said central remote unit (10) issues a signal (SC) to call a mobile service centre (17) if the positive alarm signal (SP) remains active even after the said device (8) has made a call, that is to say, if the values checked (Vr) remain different from the reference values (Vc).

9. The system according to claim 1 **characterized in that** the said call unit (8) consists of a first modem (18) for transmitting data by cable, connected to the microprocessor unit (1) and designed to transmit and receive data to and from a second remote modem (19) connected to the said central remote unit (10).

## Patentansprüche

1. Steuer- und Wartungssystem für Dentaleinheiten, enthaltend wenigstens eine Einheit (1) zur Überwachung der Dentaleinheit; wobei die genannte Einheit (1) an erste und zweite Mittel (2) und (3) angeschlossen ist, dazu bestimmt, die wichtigsten (4) und sekundären (5) Anlagenteile der Dentaleinheit zu aktivieren und zu steuern und die Betriebsfunktionsdaten sowie Hilfsdaten der gewählten Teile der genannten Anlage zu verarbeiten und zu ändern, und enthaltend:
- eine Einheit (6) zur Kontrolle von Werten (Vr), die auf die wichtigsten (4) und sekundären (5) Anlagenteile bezogen sind, wobei die genannten Werte (Vr) mit eingegebenen Bezugswerten (Vc) verglichen werden;
- eine Alarmvorrichtung (7), angeschlossen an die Kontrolleinheit (6) und dazu bestimmt, ein positives Ausgangssignal (SP) auszusenden, wenn eine Differenz zwischen den erfassten Werten (Vr) und den Bezugswerten (Vc) gefunden worden ist, wobei das Signal auch die verschiedenen, auf das Teil oder die Teile der Anlage (4, 5) bezogenen Daten anzeigt;
wobei das genannte System **dadurch gekennzeichnet ist, dass** es weiter enthält:
- eine Vorrichtung (8) zum Aktivieren einer Fernabrufeinheit (9), welche eine On-Line-Verbindung zu einer Fernwartungseinheit (10) herstellt, in der Lage, direkt mit der Mikroprozessoreinheit (1) zusammenzuwirken, welche die Dentaleinheit überwacht.

2. System nach Patentanspruch 1, **dadurch gekennzeichnet, dass** die genannte Einheit (6) automatisch jedesmal aktiviert ist, wenn die Dentaleinheit eingeschaltet wird.

3. System nach Patentanspruch 1, **dadurch gekennzeichnet, dass** die genannte Einheit (6) in regelmässigen, eingestellten Intervallen aktiviert wird, festgelegt durch die Eingabe eines geeigneten Zeitintervalls in die Mikroprozessoreinheit (1).

4. System nach Patentanspruch 1, bei welchem die genannte Dentaleinheit ein Sichtgerät (11) zur Anzeige der Betriebsfunktionsdaten und der Hilfsdaten der genannten Anlage hat, **dadurch gekennzeichnet, dass** die Alarmvorrichtung (7) aus einer akustischen Einheit (12) und einem Displayfeld (13) auf dem Sichegerät (11) besteht, in welchem die genannten verschiedenen erfassten Daten angezeigt werden.

5. System nach Patentanspruch 1, bei welchem die genannte Dentaleinheit eine Konsole (14) hat, ausgestattet mit einem Sichtgerät (11), das in mehrere Displayfelder (CV) aufgeteilt ist, die den vorgenannten Tasten (15) zugeordnet sind, dazu bestimmt, einige der genannten Anlagenteile (4, 5) zu aktivieren und einzustellen und angeordnet unterhalb des Sichtgerätes (11), **dadurch gekennzeichnet, dass** die genannte Vorrichtung (8) zum Aktivieren der Fernabrufeinheit (9) aus einer ersten Taste (15a) besteht, die von Hand bedient werden kann und eine Displayseite auf dem Sichtgerät (11) öffnet, welche die den anderen darunterliegenden Tasten (15) zugeordnete Funktionen enthält, wobei letztere es möglich machen, die Abrufeinheit (9) zu aktivieren, sowie aus einer zweiten Taste (15b), dazu bestimmt, den Abruf zu löschen und das vorgenannte, von der Alarmanlage (7) ausgesandte positive Signal (SP) zu übergehen.

6. System nach Patentanspruch 1, **dadurch gekennzeichnet, dass** die genannte Vorrichtung (8) zum Aktivieren der Fernabrufeinheit (9) aus zwei Tasten (15a und 15b) besteht, wobei die erste (15a) dazu bestimmt ist, die genannte Abrufeinheit (9) unverzüglich zu aktivieren, und die zweite (15b) das von der Alarmvorrichtung (7) ausgesandte positive Signal (SP) zu löschen.

7. System nach Patentanspruch 1, **dadurch gekennzeichnet, dass** die genannte Vorrichtung (8) zum Aktivieren der Fernabrufeinheit (9) aus einer Taste (15c) zum Löschen des von der Alarmvorrichtung (7) ausgesandten positiven Signals (SP) besteht und aus einem Zeitgeber (16), der an die genannte Taste (15c) angeschlossen und dazu bestimmt ist, die genannte Abrufeinheit (9) zu aktivieren, wenn das positive Signal (SP) für länger als eine bestimmte, in den genannten Taktgeber (16) eingegebene Zeitspanne aktiv bleibt.

8. System nach Patentanspruch 1, **dadurch gekennzeichnet, dass** die genannte zentrale Ferneinheit (10) ein Signal (SC) aussendet, um ein mobiles Service-Center (17) zu rufen, wenn das positive Alarmsignal (SP) aktiv bleibt, auch nachdem die genannte Vorrichtung (8) einen Abruf vorgenommen hat, das heisst wenn die erfassten Werte (Vr) von den Bezugswerten (Vc) unterschiedlich bleiben.

9. System nach Patentanspruch 1, **dadurch gekennzeichnet, dass** die genannte Abrufeinheit (8) aus einem ersten Modem (18) zur Übertragung von Daten über Kabel besteht, angeschlossen an die Mikroprozessoreinheit (1) und dazu bestimmt, Daten an ein zweites, entfernt angeordnetes Modem 19, das an die genannte zentrale Ferneinheit 10 angeschlossen ist, zu übertragen und von diesem zu empfangen.

## Revendications

1. Un système de commande et de service pour unité dentaire comprenant au moins une unité (1) pour contrôler l'unité dentaire ; ladite unité (1) étant reliée à des premiers et des deuxièmes moyens (2) et (3) destinés à activer et commander des pièces d'équipement principales (4) et secondaires (5) de l'unité dentaire et à traiter et modifier des données de fonction opérationnelles et des données accessoires relatives à des pièces sélectionnées de l'équipement en question, et comprenant :
- une unité (6) destinée à vérifier des valeurs (Vr) corrélées avec les pièces d'équipement principales (4) et secondaires (5), lesdites valeurs (Vr) étant comparées avec des valeurs de référence préétablies (Vc) ;
- un dispositif d'alarme (7) relié à l'unité de vérification (6) et destiné à émettre, en sortie, un signal positif (SP) quand une différence entre les valeurs vérifiées (Vr) et les valeurs de référence (Vc) est relevée, le signal indiquant aussi la donnée ou les données différentes relevées, corrélées avec la pièce ou les pièces d'équipement (4, 5) ;
ledit système étant **caractérisé en ce qu'**il comprend également :
- un dispositif (8) destiné à activer une unité d'appel distante (9) qui établit une liaison en ligne avec une unité de service distante (10) capable d'interagir directement avec l'unité (1) à microprocesseur qui contrôle l'unité dentaire.

2. Le système selon la revendication 1, **caractérisé en ce que** ladite unité (6) est activée automatiquement chaque fois que l'unité dentaire est mise sous tension.

3. Le système selon la revendication 1, **caractérisé en ce que** ladite unité (6) est activée à intervalles réguliers préétablis, définis en entrant un intervalle de temps approprié dans l'unité (1) à microprocesseur.

4. Le système selon la revendication 1, où ladite unité dentaire est pourvue d'un afficheur (11) pour afficher les données de fonction opérationnelles et les données accessoires de l'équipement en question, **caractérisé en ce que** ledit dispositif d'alarme (7) est composé d'une unité sonore (12) et d'un champ d'affichage (13) prévu sur l'afficheur (11), dans lequel ladite donnée ou lesdites données différentes relevées sont affichées.

5. Le système selon la revendication 1, où ladite unité dentaire a une console (14) pourvue d'un afficheur (11) subdivisé en plusieurs champs d'affichage (CV) corrélés avec des boutons (15) destinés à activer et à régler certaines des pièces d'équipement (4, 5) en question et situés en dessous de l'afficheur (11), **caractérisé en ce que** ledit dispositif (8) d'activation de l'unité d'appel distante (9) consiste en un premier bouton (15a), qui peut être actionné manuellement et qui ouvre une page-écran sur l'afficheur (11) contenant des fonctions qui sont corrélées avec d'autres boutons (15) sous-jacents, ces derniers permettant d'activer l'unité d'appel (9), et en un deuxième bouton (15b) destiné à annuler l'appel et à dériver le signal positif (SP) susmentionné émis par le dispositif d'alarme (7).

6. Le système selon la revendication 1, **caractérisé en ce que** ledit dispositif (8) d'activation de l'unité d'appel distante (9) consiste en deux boutons (15a et 15b), le premier bouton (15a) étant destiné à activer instantanément ladite unité d'appel (9) et le deuxième bouton (15b) à annuler le signal positif (SP) émis par le dispositif d'alarme (7).

7. Le système selon la revendication 1, **caractérisé en ce que** ledit dispositif (8) d'activation de l'unité d'appel distante (9) consiste en un bouton (15c) destiné à annuler le signal positif (SP) émis par le dispositif d'alarme (7) et en un temporisateur (16) relié à ce même bouton (15c) et destiné à activer ladite unité d'appel (9) si le signal positif (SP) reste actif pendant un temps supérieur au délai de temps préétabli entré dans ledit temporisateur (16).

8. Le système selon la revendication 1, **caractérisé en ce que** ladite unité centrale distante (10) émet un signal (SC) pour appeler un centre d'assistance mobile (17) si le signal d'alarme positif (SP) reste actif même une fois que le dispositif (8) a effectué l'appel, c'est-à-dire, si les valeurs vérifiées (Vr) restent différentes par rapport aux valeurs de référence (Vc).

9. Le système selon la revendication 1, **caractérisé en ce que** ladite unité d'appel (8) consiste en un premier modem (18) pour la transmission de données par câble, relié à l'unité (1) à microprocesseur et destiné à transmettre et à recevoir des données vers et depuis un deuxième modem distant (19) relié à ladite unité centrale distante (10).
